# EUROPEAN PATENT SPECIFICATION

(11) **EP 3 712 419 B1**
(45) Date of publication and mention of the grant of the patent: **11.12.2024**
(21) Application number: 19290017.3
(22) Date of filing: 19.03.2019
(51) Int. Cl.: F02M 35/08, B01D 45/18, B01D 46/42, B01D 46/48, F16K 7/07

(54) **MULTI-VALVE DEVICE AND VALVE ARRANGEMENT**
MEHRVENTILVORRICHTUNG UND VENTILANORDNUNG
DISPOSITIF À VANNES MULTIPLES ET AGENCEMENT DE VANNES

(43) Date of publication of application: 23.09.2020
(73) Proprietor: MANN+HUMMEL GmbH, 71636 Ludwigsburg (DE)
(72) Inventor: Migaud, Jérôme, 35500 Vitré (FR); Zenner, Julien, 53940 Ahuille (FR); Sarrazin, Maxime, deceased (FR)
(74) Representative: Mann + Hummel Intellectual Property

(56) References cited:
- EP-A1- 2 960 483
- CN-A- 108 397 568
- DE-A1- 10 131 021
- DE-A1- 102005 020 442
- DE-A1- 102013 211 550
- US-A- 4 820 315
- US-A- 5 305 982
- US-A1- 2006 168 958

## Description

### Technical Field

The invention relates to an air filter system comprising a multi-valve device for scavenging particulate dust, and a valve arrangement comprising a multi-valve device as well as a method for scavenging particulate dust from an air filter system.

### Prior Art

US 2010/0229972 A1 discloses an inertially activated ejection valve providing an inertially activated effluent ejector, and particularly an inertially activated dust ejector for an air induction system of an internal combustion engine in a vibratory system generating vibration. The vibration can be that of the engine itself, or a driven component such as an eccentric rotary driven weight. The dust ejection valve can be provided at various places in the air induction system of the internal combustion engine and is provided between the pre-cleaner and the air filter.

US 2010/0229972 A1 further discloses a method for ejecting dust from an air induction system of an internal combustion engine in a vibratory system generating vibration. The method includes providing a dust ejection valve including an inertial mass, and inertially activating and driving the inertial mass by vibration to discharge dust from the air induction system. The method further includes providing the inertial mass as a plunger, and inertially driving the plunger by the vibration to vibrate and oscillate to an amplitude along an axial oscillation axis. Further it includes translating and oscillating the plunger inertial mass along an axial travel stroke in a channel extending along the oscillation axis, providing the plunger inertial mass with at least one valve face, providing the channel with at least one valve seat, and engaging the valve face and the valve seat at one end of the travel stroke.

From CN 108 397 568 A a flexible valve is known comprising an upper valve body, a lower valve body and a membrane sleeve, wherein the membrane sleeve is provided with a material conveying channel. The two ends of the membrane sleeve are connected with the upper valve body and the lower valve body correspondingly and the upper valve body or/and the lower valve body is/and connected in an axially-rotatable manner. When the upper valve body or/and the lower valve body axially rotates, the membrane sleeve is driven to rotate and distort, and a sealing point is formed.

US 4 820 315 A displays a unique vacuum loader and process to remove, collect, and dispose asbestos, hazardous material, and other particulate matter under continuous negative pressure. During the vacuuming process, a top valve will remain open for a time period to fill the reservoir tube by about 50 percent. During this time period, a lower valve will remain shut.

DE 10 2013 211550 A1 relates to a powder feeding device, in particular for coating powder. The powder feeding device comprises a control device which is provided for selectively operating a dense phase powder pump in a powder conveying operating mode or a flushing operating mode. A powder inlet valve and the powder outlet valve of the dense phase powder pump are configured in each case as a pneumatically actuable compression valve which can be closed when an actuating pressure is applied.

US 2006/0168958 A1 proposes a supercharged internal combustion engine system wherein the supercharger assembly includes an ejector pump driven by high-pressure air for pumping intake air into engine combustion chamber. During periods of natural engine aspiration the ejector pump can be by-passed to reduce flow impedance.

EP 2 960 483 A1 proposes a dust discharge valve with an outlet opening and the dust separated during operation at least partially collected in a dust collection area in front of the outlet opening. The dust discharge valve has a closing element which is arranged on the outlet opening so that it can be opened in the outlet direction, and which keeps the outlet opening closed by a closing force during engine operation. The dust discharge valve can also be opened and/or released in a controlled and/or automated manner by means of an opening and/or blowing device.

### Disclosure of the Invention

It is an object of the invention to provide an air filter system comprising a multi-valve device with a simple and robust operating performance for scavenging particulate dust, and comprising also a valve arrangement using said multi-valve device.

A further object of the invention is to provide a method for scavenging particulate dust, from an air filter system with such a valve arrangement.

One object of the invention is achieved by an air filter system comprising a multi-valve device for scavenging particulate dust from the air filter system, comprising at least a first valve and a second valve arranged in series along a fluid path, to establish a collection volume for the particulate matter, wherein the first valve and the second valve each comprise a housing segment and a flexible membrane arranged inside the housing segment, wherein in each valve the flexible membrane is configured to close or open the fluid path through the valve, wherein the first valve and the second valve are configured to be connectable to a valve control unit for activating the flexible membranes independently from each other.

A further object of the invention is achieved by the air filter system with a valve arrangement comprising a multi-valve device, the multi-valve device having at least a first and a second valve, wherein a valve control unit is provided for activating flexible membranes of valves of the multi-valve device independently from each other, and comprising a two-way valve for supplying the first valve with air and for supplying the second valve with air either, wherein the two-way valve being particularly a solenoid valve.

A further object of the invention is achieved by a method for scavenging particulate dust from an air filter system, where a valve arrangement is connected to an outlet for particulate matter of the air filter system, the valve arrangement comprising a multi-valve device, the multi-valve device having at least a first and a second valve, wherein a valve control unit is provided for activating flexible membranes of valves of the multi-valve device independently from each other, and comprising a two-way valve for supplying the first valve with air and for supplying the second valve with air either, wherein the two-way valve being particularly a solenoid valve, the method comprising the air filter system operating in a first working phase with the first valve being open and the second valve being closed by the activated second flexible membrane for collecting particulate matter in a collection volume for the particulate matter, and the air filter system operating in a second working phase with the first valve being closed by the activated second flexible membrane and the second valve being open for scavenging particulate matter from the collection volume for the particulate matter along a fluid path through a second connector.

The dependent claims, the description and the drawings describe advantageous embodiments of the invention.

According to a first aspect of the invention, an air filter system comprising a multi-valve device is proposed for scavenging particulate dust from the air filter system, comprising at least a first valve and a second valve arranged in series along a fluid path, to establish a collection volume for the particulate matter. The first valve and the second valve each comprise a housing segment and a flexible membrane arranged inside the housing segment. In each valve the flexible membrane is configured to close or open the fluid path through the valve. The first valve and the second valve are configured to be connectable to a valve control unit for activating the flexible membranes independently from each other.

The inventive air filter system comprising a multi-valve device may advantageously be used for flow controlling along the fluid path for dust collecting and scavenging. According to a favorable embodiment the multi-valve device may comprise three subsystems. Two housing segments as bodies with a flexible membrane forming an inflatable chamber and a central connection component between the two housing segments. The central connection component keeps membranes on both sides in place and allows the fixation of an air admission system. The upper housing segment may comprise an inflatable pinch valve held with a clip connector. The clip connector may include an interface for air filter plugging. The lower housing segment may also comprise an inflatable membrane held by a clip connector. The air admission system may supply air pressure for inflating alternatively chambers of both membranes. When a chamber of a flexible membrane is supplied with air, the corresponding valve pipe is closed. By this way the inventive air filter system comprising a multi-valve device may be used to collect dust from an air filter. In a first working phase the first valve adjacent to the air filter system may be open, thus representing in its inner space the collection volume for particulate dust, whereas the second valve connected in series is closed by inflating the chamber of the flexible membrane. For scavenging the particulate dust from the system, in a second working phase the first valve adjacent to the air filter system may be closed by inflating the chamber of the corresponding membrane, whereas the second valve may be opened by deflating the chamber of the flexible membrane. Thus the particulate matter from the collection volume of the first valve is transported, e.g. by gravity or by fluid pressure, from the first valve to the second valve and may exit through an outlet of the valve.

Alternatively the flexible membranes may be activated mechanically for closing and opening the corresponding valves.

The flexible membranes may be manufactured from rubber material or other elastomers, which are resistant to dust and/or oil and may work in ambient temperatures from - 20°C to 140°C, which are temperatures usually required in the ambience of internal combustion engines. Typical dimensions may be in the range of a length of about 60 mm with an internal free diameter of about 30 to 40 mm. It is to be understood that the dimensions may vary depending on the actual application of the multi-valve device.

The described air filter system comprising a multi-valve device may advantageously be used for heavy-duty tractors or construction machines. The device may be integrated at an air filter system in a vertical position or an angled position to a vertical direction. Connection to the air filter system may advantageously be achieved by a quick connector system.

The multi-valve device is assembled from existing pinch valves for creating a dust collection volume and is used for dust pre-separation of an air filter. The flexible membranes of the pinch valves may be activated with pressure from a turbocharger when being integrated in an internal combustion engine.

The inventive air filter system comprising a multi-valve device reduces the risk of having leakages when dust discharging from an air filter system, which may advantageously improve dust pre-separation efficiency. More over the proposed air filter system comprising a multi-valve device may be able to work with a two stages turbo-charged engine.

According to the claimed embodiment of the air filter system comprising a multi-valve device, the first valve and/or the second valve are configured as a pinch valve. Pinch valves are commercially available in various dimensions, such that the multi-valve device may be assembled according to the dimensions of the air filter system where the multi-valve device is intended to collect and scavenge dust during operation of the air filter system. Such pinch valves are advantageously available also for robust working conditions and ambiences.

According to the claimed embodiment of the air filter system comprising a multi-valve device, the flexible membranes of the first valve and the second valve are formed integrally, in particular wherein each of the flexible membranes may provide a separated inflatable and deflatable chamber between the respective membrane and housing segment. Thus the flexible membrane formed integrally may be manufactured at a lower price. Favorably sealing of the chambers of the flexible membrane to each other and against the ambience may be provided in a reliable way.

According to an advantageous embodiment of the air filter system comprising a multi-valve device, a separation ring may be arranged in the collection volume for the particulate matter between the two membranes, being configured to secure the flexible membranes to an inner wall of the housing segments. Thus fixation of the flexible membrane in the multi-valve device as well as sealing of the two chambers working independently to each other may be provided in an efficient and reliable way.

According to an advantageous embodiment of the air filter system comprising a multi-valve device, the housing segments of the first valve and the second valve may be formed integrally. In such an embodiment connection of the two valves may be facilitated. Further manufacturing of the multi-valve device may be achieved in an efficient and reliable manner. Sealing of the two valves to each other is intrinsically achieved.

According to an advantageous embodiment of the air filter system comprising a multi-valve device, the first housing segment and the second housing segment may be joined by a connection component. Favorably the connection segment serves for connecting and sealing the two valves to each other. Thus assembling the multi-valve device may be achieved in a very efficient and flexible way. Further changing one of the valves in case of maintenance may also be facilitated in a favorable manner.

According to an advantageous embodiment of the air filter system comprising a multi-valve device, the first valve may comprise a first connector arranged opposite to the second valve with respect to the fluid path and/or the second valve may comprise a second connector arranged opposite to the first valve with respect to the fluid path. The connectors may serve for easy integration of the multi-valve device to an air filter system as well as to a dust collection system. Advantageously quick connectors may be used for easy connection and flexible changing of the multi-valve device in case of maintenance of the system.

According to an advantageous embodiment of the air filter system comprising a multi-valve device, the first connector may be configured to secure a section of the first flexible membrane and/or the second connector may be configured to secure a section of the second flexible membrane, and/or wherein an interface region between the first and second housing segments may be configured to secure a section of at least one of the flexible membranes. In such an embodiment the flexible membranes may easily be assembled to the housing segments of the valves. Further sealing of the flexible membranes against the housing segments and the ambience may be facilitated. Thus a robust design of the multi-valve device may be achieved.

According to a further aspect of the invention, the air filter system with a valve arrangement is proposed comprising a multi-valve device. The multi-valve device has at least a first and a second valve. A valve control unit is provided for activating flexible membranes of valves of the multi-valve device independently from each other. The valve arrangement comprises a two-way valve for supplying the first valve with air and for supplying the second valve with air either. The two-way valve may particularly be a solenoid valve. The valve control unit together with the two-way valve may serve for activating the flexible membranes of the multi-valve device, thus controlling the functions of the scavenging an air filter system from particulate matter such as dust. By this way all advantages of the proposed multi-valve device described above may be achieved in a favorable manner.

According to an advantageous embodiment, the flexible membranes may be controlled pneumatically by the valve control unit, in particular by air pressure. Pneumatic control of the flexible membranes is a very efficient and fast reaction means for opening and closing the valves of the multi-valve device. Further air pressure from turbo-chargers may favorably be used, if integrating the valve arrangement in an internal combustion engine, particularly in heavy duty engines of construction machines.

According to an advantageous embodiment of the valve arrangement, the valve control unit may be fixed to the interface region, in particular wherein the valve control unit may be fixed to a connection component located at the interface region. Thus the valve control may easily be fixed to the multi-valve device for efficient assembling of the valve arrangement and easy maintenance. Further short distances between the valve control and the valves is advantageous for connecting air pipes from the valve control to the valves.

According to a further aspect of the invention, a method is proposed for scavenging particulate dust from an air filter system. A valve arrangement is connected to an outlet for particulate matter of the air filter system. The valve arrangement comprises a multi-valve device, which has at least a first and a second valve. A valve control unit is provided for activating flexible membranes of valves of the multi-valve device independently from each other. The valve arrangement comprises a two-way valve for supplying the first valve with air and for supplying the second valve with air either. The two-way valve may particularly be a solenoid valve. The method comprises operating the air filter system in a first working phase with the first valve being open and the second valve being closed by the activated second flexible membrane for collecting particulate matter in a collection volume for the particulate matter, and operating the air filter system in a second working phase with the first valve being closed by the activated second flexible membrane and the second valve being open for scavenging particulate matter from the collection volume for the particulate matter along a fluid path through a second connector.

The valve arrangement comprises a two-way valve for supplying the first valve with air and for supplying the second valve with air either. The two-way valve may particularly be a solenoid valve. The valve control unit together with the two-way valve may serve for activating the flexible membranes of the multi-valve device, thus controlling the functions of the scavenging an air filter system from particulate matter such as dust.

The multi-valve device is used for flow controlling along the fluid path for dust collecting and scavenging. According to a favorable embodiment the air filter system comprising the multi-valve device may comprise three subsystems, i.e. two housing segments as bodies with a flexible membrane forming an inflatable chamber and a central connection component between the two housing segments. The central connection component keeps membranes on both sides in place and allows the fixation of an air admission system. The upper housing segment may comprise an inflatable pinch valve held with a clip connector. The clip connector may include an interface for air filter plugging. The lower housing segment may also comprise an inflatable membrane held by a clip connector. The air admission system may supply air pressure for inflating alternatively chambers of both membranes. When a chamber of a flexible membrane is supplied with air, the corresponding valve pipe is closed. By this way the inventive air filter system comprising a multi-valve device is used to collect dust from an air filter.

In a first working phase the first valve adjacent to the air filter system may be open, thus representing in its inner space the collection volume for particulate dust, whereas the second valve connected in series is closed by inflating the chamber of the flexible membrane. For scavenging the particulate matter from the system, in a second working phase the first valve adjacent to the air filter system may be closed by inflating the chamber of the corresponding membrane, whereas the second valve may be opened by deflating the chamber of the flexible membrane. Thus the particulate matter from the collection volume of the first valve is transported, e.g. by gravity or by fluid pressure, from the first valve to the second valve and may exit through an outlet of the valve.

### Brief Description of the Drawings

The present invention together with the above-mentioned and other objects and advantages may best be understood from the following detailed description of the embodiments, but not restricted to the embodiments, wherein is shown in:
- Figure 1: schematics of a valve arrangement with a multi-valve device according to an embodiment of the inventive air filter system;
- Figure 2: schematics of a valve arrangement with a multi-valve device according to a further embodiment of the inventive air filter system;
- Figure 3: schematics of an air filter system with a valve arrangement in a first working phase for collecting dust particles according to an embodiment of the invention; and
- Figure 4: schematics of an air filter system with a valve arrangement in a second working phase for scavenging dust particles from the air filter system according to an embodiment of the invention.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

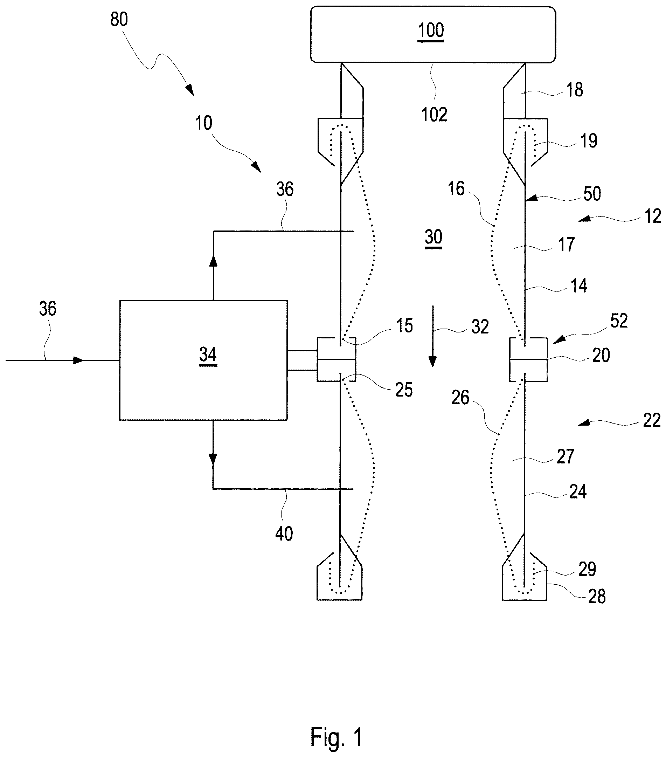

Figure 1 depicts schematics of a valve arrangement 80 with a multi-valve device 10 according to an embodiment of the inventive air filter system 100 for scavenging particulate dust 46 from the air filter system 100.

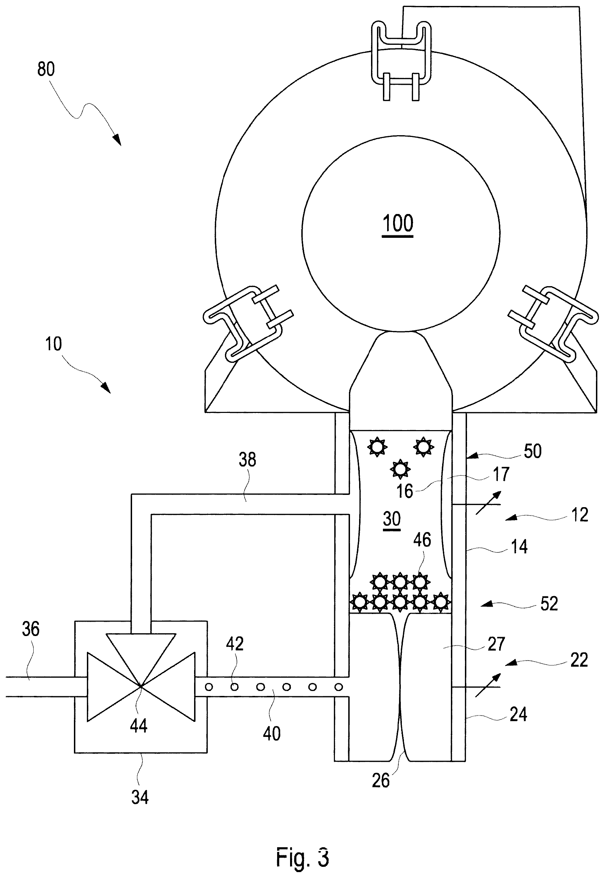

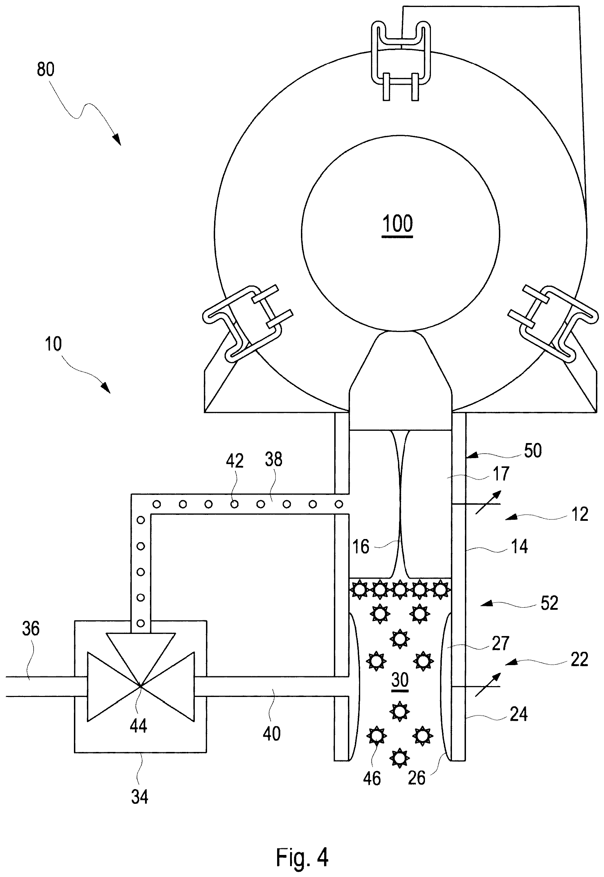

The valve arrangement 80 comprises the multi-valve device 10, consisting of a first and a second valve 12, 22. A valve control unit 34 as an air distributor system is provided for activating flexible membranes 16, 26 of the valves 12, 22 of the multi-valve device 10 independently from each other. The valve control 34 comprises a two-way valve 44, depicted in the embodiments shown in Figures 3 and 4, for supplying the first valve 12 with air and for supplying the second valve 22 with air either via air pipes 38, 40 respectively, wherein the two-way valve 44 being particularly a solenoid valve.

The first valve 12 and the second valve 22 are configured as a pinch valve each. The first valve 12 and the second valve 22 of the multi-valve device 10 are arranged in series along a fluid path 32, to establish a collection volume 30 for the particulate matter 46. The first valve 12 and the second valve 22 each comprise a housing segment 14, 24 and a flexible membrane 16, 26 arranged inside the housing segment 14, 24, forming a separated inflatable and deflatable chamber 17, 27. In each valve 12, 22 the flexible membrane 16, 26 is configured to close or open the fluid path 32 through the valve 12, 22. The first valve 12 and the second valve 22 are connected to the valve control unit 34 for activating the flexible membranes 16, 26 independently from each other. The flexible membranes 16, 26 are controlled pneumatically by the valve control unit 34, in particular by air pressure, being supplied by an air supply system 36.

The first housing segment 14 and the second housing segment 24 are joined by a connection component 20, thus forming a housing of the multi-valve device 10. The valve control unit 34 is fixed to the interface region 52, in particular is the valve control unit 34 fixed to the connection component 20 located at the interface region 52.

According to the invention, the housing segments 14, 24 of the first valve 12 and the second valve 22 are formed integrally for easy assembly of the multi-valve device 10.

The first valve 12 comprises a first connector 18 arranged opposite to the second valve 22 with respect to the fluid path 32 and the second valve 22 comprises a second connector 28 arranged opposite to the first valve 12 with respect to the fluid path 32. The multi-valve device 10 is connected to a dust outlet 102 of the air filter system 100 with the first connector 18. The second connector 28 may serve for connecting the multi-valve device 10 to a dust collecting system.

The first connector 18 is configured to secure a section 19 of the first flexible membrane 16 and the second connector 28 is configured to secure a section 29 of the second flexible membrane 26. The interface region 52 between the first and second housing segments 14, 24 is configured to secure a section 15, 25 of the flexible membranes 16, 26.

Using the valve arrangement 80 with the air filter system 100 depicted in Figure 1 allows to apply a method for scavenging particulate matter 46, in particular dust, from the air filter system 100. In a first working phase the first valve 12 is open and the second valve 22 is closed by the activated second flexible membrane 26 for collecting particulate matter 46 in a collection volume 30 for the particulate matter 46. In a second working phase the first valve 12 is closed by the activated second flexible membrane 26 and the second valve 22 is open for scavenging particulate matter 46 from the collection volume 30 for the particulate matter 46 along a fluid path 32 through a second connector 28.

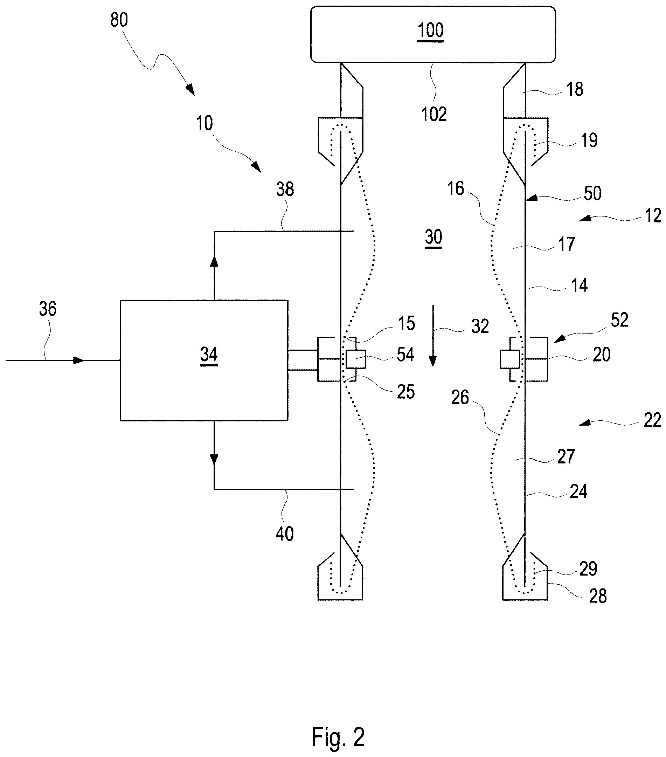

Figure 2 depicts schematics of a valve arrangement 80 with a multi-valve device 10 according to a further embodiment of the inventive air filter system. The multi-valve device 10 of the embodiment shown in Figure 2 differs from the embodiment shown in Figure 1 by the fact, that the flexible membranes 16, 26 of the first valve 12 and the second valve 22 are formed integrally as a single piece. There still exist two membrane sections 15, 25 of the first and the second valve 12, 22, respectively, wherein each of the flexible membrane sections 15, 25 provide a separated inflatable and deflatable chamber 17, 27 between the respective membrane 16, 26 and housing segment 14, 24. A separation ring 54 is arranged in the collection volume 30 for the particulate matter 46 between the two membranes 16, 26. The separation ring 54 is configured to secure the flexible membranes 16, 26 with its membrane sections 15, 25 to an inner wall of the housing segments 14, 24 by pressing the membranes 16, 26 against the inner wall. Thus the membranes 16, 26 are fixed and two separated inflatable chambers 17, 27 are formed.

Figure 3 depicts schematics of an air filter system 100 with a valve arrangement 80 in a first working phase for collecting dust particles 46 according to an embodiment of the invention, whereas Figure 4 depicts the air filter system 100 in a second working phase for scavenging the dust particles 46 from the air filter system 100.

The embodiment shown in Figure 3 resembles the embodiments shown in Figures 1 and 2, except that there is no connection component 20, because the two valves 12, 22 are directly connected in the interface region 52 without an additional connection component 20. This is due to simplification of the schematics in order to show the main functions of the valve arrangement 80 only. The valve control unit 34 comprises a two-way valve 44 for controlling the air flow 42 from the air supply system 36 to the chambers 17, 27 of the flexible membranes 14, 24 of the valves 12, 22 via air pipes 38, 40 respectively 36.

In the first working phase the first valve 12 adjacent to the air filter system 100 is open, thus representing in its inner space the collection volume 30 for particulate matter 46 as e.g. dust, whereas the second valve 22 connected in series is closed by inflating the chamber 27 of the flexible membrane 24. For scavenging the particulate matter 46 from the air filter system 100, in the second working phase the first valve 12 adjacent to the air filter system 100 is closed by inflating the chamber 17 of the corresponding membrane 14, whereas the second valve 22 is opened by deflating the chamber 27 of the flexible membrane 24. Thus the particulate matter 46 from the collection volume 30 of the first valve 12 is transported, e.g. by gravity or by fluid pressure, from the first valve 12 to the second valve 22 and may exit through an outlet of the valve 22.

## Claims

1. An air filter system (100) comprising a multi-valve device (10) for scavenging particulate dust (46) from said air filter system (100) comprising at least a first valve (12) and a second valve (22) arranged in series along a fluid path (32), to establish a collection volume (30) for the particulate matter (46), wherein the first valve (12) and the second valve (22) each comprise a housing segment (14, 24) and a flexible membrane (16, 26) arranged inside the housing segment (14, 24), wherein in each valve (12, 22) the flexible membrane (16, 26) is configured to close or open the fluid path (32) through the valve (12, 22), wherein the first valve (12) and the second valve (22) are configured to be connectable to a valve control unit (34) for activating the flexible membranes (16, 26) independently from each other, wherein the first valve (12) and the second valve (22) being configured as a pinch valve, wherein the flexible membranes (16, 26) of the first valve (12) and the second valve (22) are formed integrally, in particular wherein each of the flexible membranes (16, 26) provide a separated inflatable and deflatable chamber (17, 27) between the respective membrane (16, 26) and housing segment (14, 24).

2. The air filter system (100) according to claim 1, wherein a separation ring (54) is arranged in the collection volume (30) for the particulate matter (46) between the two membranes (16, 26), being configured to secure the flexible membranes (16, 26) to an inner wall of the housing segments (14, 24).

3. The air filter system (100) according to any one of the preceding claims, wherein the housing segments (14, 24) of the first valve (12) and the second valve (22) are formed integrally.

4. The air filter system (100) according to one of the claims 1 or 2, wherein the first housing segment (14) and the second housing segment (24) are joined by a connection component (20).

5. The air filter system (100) according to any one of the preceding claims, wherein the first valve (12) comprises a first connector (18) arranged opposite to the second valve (22) with respect to the fluid path (32) and/or the second valve (22) comprises a second connector (28) arranged opposite to the first valve (12) with respect to the fluid path (32).

6. The air filter system (100) according to claim 5, wherein the first connector (18) is configured to secure a section (19) of the first flexible membrane (16) and/or the second connector (28) is configured to secure a section (29) of the second flexible membrane (26), and/or wherein an interface region (52) between the first and second housing segments (14, 24) is configured to secure a section (15, 25) of at least one of the flexible membranes (16, 26).

7. The air filter system (100) according to any one of the preceding claims, with a valve arrangement (80) comprising the multi valve device (10), the multi-valve device (10) having at least a first and a second valve (12, 22), wherein a valve control unit (34) is provided for activating flexible membranes (16, 26) of valves (12, 22) of the multi-valve device (10) independently from each other, and comprising a two-way valve (44) for supplying the first valve (12) with air and for supplying the second valve (22) with air either, wherein the two-way valve (44) being particularly a solenoid valve.

8. The air filter system (100) according to claim 7, wherein the flexible membranes (16, 26) are controlled pneumatically by the valve control unit (34), in particular by air pressure.

9. The air filter system (100) according to claim 7 or 8 comprising the air filter system according to claim 6, wherein the valve control unit (34) is fixed to the interface region (52), in particular wherein the valve control unit (34) is fixed to a connection component (20) located at the interface region (52).

10. A method for scavenging particulate dust (46) from an air filter system (100) according to the claims 67 to 9, where the valve arrangement (80) is connected to an outlet (102) for particulate dust (46) of the air filter system (100), the multi-valve device (10) having at least a first and a second valve (12, 22), wherein a valve control unit (34) is provided for activating flexible membranes (16, 26) of valves (12, 22) of the multi-valve device (10) independently from each other, and comprising a two-way valve (44) for supplying the first valve (12) with air and for supplying the second valve (22) with air either, wherein the two-way valve (44) being particularly a solenoid valve,
the method comprising
- operating the air filter system (100) in a first working phase with the first valve (12) being open and the second valve (22) being closed by the activated second flexible membrane (26) for collecting particulate matter (46) in a collection volume (30) for the particulate matter (46),
- operating the air filter system (100) in a second working phase with the first valve (12) being closed by the activated second flexible membrane (26) and the second valve (22) being open for scavenging particulate matter (46) from the collection volume (30) for the particulate matter (46) along a fluid path (32) through a second connector (28).

## Patentansprüche

1. Luftfiltersystem (100) umfassend eine Mehrventileinrichtung (10) zum Spülen von Staubpartikeln aus dem Luftfiltersystem (100), die mindestens ein erstes Ventil (12) und ein zweites Ventil (22) umfasst, die in Reihe entlang eines Fluidpfads (32) angeordnet sind, um ein Sammelvolumen (30) für die Staubpartikeln (46) zu schaffen, wobei das erste Ventil (12) und das zweite Ventil (22) jeweils ein Gehäusesegment (14, 24) und eine im Inneren des Gehäusesegments (14, 24) angeordnete flexible Membran (16, 26) umfassen, wobei in jedem Ventil (12, 22) die flexible Membran (16, 26) so konfiguriert ist, dass sie den Fluidweg (32) durch das Ventil (12, 22) schließt oder öffnet, wobei das erste Ventil (12) und das zweite Ventil (22) so konfiguriert sind, dass sie mit einer Ventilsteuereinheit (34) verbunden werden können, um die flexiblen Membranen (16, 26) unabhängig voneinander zu aktivieren, wobei das erste Ventil (12) und das zweite Ventil (22) als ein Quetschventil konfiguriert sind, wobei die flexiblen Membranen (16, 26) des ersten Ventils (12) und des zweiten Ventils (22) einstückig ausgebildet sind, insbesondere wobei jede der flexiblen Membranen (16, 26) eine getrennte aufblasbare und entleerbare Kammer (17, 27) zwischen der jeweiligen Membran (16, 26) und dem Gehäusesegment (14, 24) bildet.

2. Luftfiltersystem (100) nach Anspruch 1, wobei im Sammelvolumen (30) für die Staubpartikeln (46) zwischen den beiden Membranen (16, 26) ein Trennring (54) angeordnet ist, der zur Sicherung der flexiblen Membranen (16, 26) an einer Innenwand der Gehäusesegmente (14, 24) ausgebildet ist.

3. Luftfiltersystem (100) nach einem der vorhergehenden Ansprüche, wobei die Gehäusesegmente (14, 24) des ersten Ventils (12) und des zweiten Ventils (22) einstückig ausgebildet sind.

4. Luftfiltersystem (100) nach einem der Ansprüche 1 oder 2, wobei das erste Gehäusesegment (14) und das zweite Gehäusesegment (24) durch ein Verbindungsbauteil (20) verbunden sind.

5. Luftfiltersystem (100) nach einem der vorhergehenden Ansprüche, wobei das erste Ventil (12) ein erstes Anschlussteil (18) umfasst, das in Bezug auf den Fluidpfad (32) gegenüber dem zweiten Ventil (22) angeordnet ist, und/oder das zweite Ventil (22) ein zweites Anschlussteil (28) umfasst, das in Bezug auf den Fluidpfad (32) gegenüber dem ersten Ventil (12) angeordnet ist.

6. Luftfiltersystem (100) nach Anspruch 5, wobei das erste Anschlussteil (18) so konfiguriert ist, dass es einen Abschnitt (19) der ersten flexiblen Membran (16) sichert und/oder das zweite Anschlussteil (28) so konfiguriert ist, dass es einen Abschnitt (29) der zweiten flexiblen Membran (26) sichert, und/oder wobei ein Schnittstellenbereich (52) zwischen dem ersten und dem zweiten Gehäusesegment (14, 24) so konfiguriert ist, dass er einen Abschnitt (15, 25) von mindestens einer der flexiblen Membranen (16, 26) sichert.

7. Luftfiltersystem (100) nach einem der vorhergehenden Ansprüche, mit einer Ventilanordnung (80), welche die Mehrventileinrichtung (10) umfasst, wobei die Mehrventileinrichtung (10) mindestens ein erstes und ein zweites Ventil (12, 22) hat, wobei eine Ventilsteuereinheit (34) vorgesehen ist, um flexible Membranen (16, 26) von Ventilen (12, 22) der Mehrventileinrichtung (10) unabhängig voneinander zu aktivieren, und ein Zweiwegeventil (44) zur Versorgung des ersten Ventils (12) mit Luft und zur Versorgung des zweiten Ventils (22) ebenfalls mit Luft umfasst, wobei das Zweiwegeventil (44) insbesondere ein Magnetventil ist.

8. Luftfiltersystem (100) nach Anspruch 7, wobei die flexiblen Membranen (16, 26) durch die Ventilsteuereinheit (34) pneumatisch, insbesondere durch Luftdruck, gesteuert werden.

9. Luftfiltersystem (100) nach Anspruch 7 oder 8, umfassend das Luftfiltersystem nach Anspruch 6, wobei die Ventilsteuereinheit (34) an dem Schnittstellenbereich (52) befestigt ist, insbesondere wobei die Ventilsteuereinheit (34) an einem im Schnittstellenbereich (52) befindlichen Verbindungsbauteil (20) befestigt ist.

10. Verfahren zum Spülen von Staubpartikeln (46) aus einem Luftfiltersystem (100) nach einem der Ansprüche 7 bis 9, wobei die Ventilanordnung (80) mit einem Auslass (102) für Staubpartikeln (46) des Luftfiltersystems (100) verbunden ist, wobei die Mehrventileinrichtung (10) mindestens ein erstes und ein zweites Ventil (12, 22) aufweist, wobei eine Ventilsteuereinheit (34) vorgesehen ist, um flexible Membranen (16, 26) von Ventilen (12, 22) der Mehrventileinrichtung (10) unabhängig voneinander anzusteuern, und ein Zweiwegeventil (44) zur Versorgung des ersten Ventils (12) mit Luft und zur Versorgung des zweiten Ventils (22) ebenfalls mit Luft umfasst, wobei das Zweiwegeventil (44) insbesondere ein Magnetventil ist, das Verfahren umfassend
- Betreiben des Luftfiltersystems (100) in einer ersten Arbeitsphase, wobei das erste Ventil (12) geöffnet und das zweite Ventil (22) durch die aktivierte zweite flexible Membran (26) zum Sammeln von Staubpartikeln (46) in einem Sammelvolumen (30) für die Staubpartikeln (46) geschlossen ist,
- Betreiben des Luftfiltersystems (100) in einer zweiten Arbeitsphase, wobei das erste Ventil (12) durch die aktivierte zweite flexible Membran (26) geschlossen ist und das zweite Ventil (22) geöffnet ist, um Staubpartikeln (46) aus dem Sammelvolumen (30) für die Staubpartikeln (46) entlang eines Fluidpfades (32) durch ein zweites Anschlussteil (28) zu spülen.

## Revendications

1. Système de filtre à air (100) comprenant un dispositif à vannes multiples (10) pour évacuer les particules de poussière du système de filtre à air (100), comprenant au moins une première vanne (12) et une seconde vanne (22) disposées en série le long d'un trajet de fluide (32), afin d'établir un volume de collecte (30) pour les particules (46), dans lequel la première vanne (12) et la seconde vanne (22) comprennent chacune un segment de boîtier (14, 24) et une membrane flexible (16, 26) disposée à l'intérieur du segment de boîtier (14, 24), dans lequel dans chaque vanne (12, 22) la membrane flexible (16, 26) est configurée pour obturer ou ouvrir le trajet de fluide (32) à travers la vanne (12, 22), dans lequel la première vanne (12) et la seconde vanne (22) sont configurées pour pouvoir être connectées à une unité de commande de vannes (34) pour activer les membranes flexibles (16, 26) indépendamment l'une de l'autre, dans lequel la première vanne (12) et la seconde vanne (22) sont configurées comme une vanne à pincement, dans lequel les membranes flexibles (16, 26) de la première vanne (12) et de la seconde vanne (22) sont réalisées d'un seul tenant, notamment dans lequel chacune des membranes flexibles (16, 26) prévoit une chambre gonflable et dégonflable séparée (17, 27) entre la membrane respective (16, 26) et le segment de boîtier (14, 24).

2. Système de filtre à air (100) selon la revendication 1, dans lequel un anneau de séparation (54) est disposé dans le volume de collecte (30) de la matière particulaire (46) entre les deux membranes (16, 26), et configuré pour fixer les membranes flexibles (16, 26) à une paroi interne des segments de boîtier (14, 24).

3. Système de filtre à air (100) selon l'une quelconque des revendications précédentes, dans lequel les segments de boîtier (14, 24) de la première vanne (12) et de la seconde vanne (22) sont réalisés d'un seul tenant.

4. Système de filtre à air (100) selon l'une quelconque des revendications 1 ou 2, dans lequel le premier segment de boîtier (14) et le second segment de boîtier (24) sont reliés par un composant de connexion (20).

5. Système de filtre à air (100) selon l'une quelconque des revendications précédentes, dans lequel la première vanne (12) comprend un premier connecteur (18) disposé à l'opposé de la seconde vanne (22) par rapport au trajet de fluide (32) et/ou la seconde vanne (22) comprend un second connecteur (28) disposé à l'opposé de la première vanne (12) par rapport au trajet de fluide (32).

6. Système de filtre à air (100) selon la revendication 5, dans lequel le premier connecteur (18) est configuré pour sécuriser une section (19) de la première membrane flexible (16) et/ou le second connecteur (28) est configuré pour sécuriser une section (29) de la seconde membrane flexible (26), et/ou dans lequel une région d'interface (52) entre le premier et le second segment de boîtier (14, 24) est configurée pour sécuriser une section (15, 25) d'au moins une des membranes flexibles (16, 26).

7. Système de filtre à air (100) selon l'une quelconque des revendications précédentes, ayant un agencement de vannes (80) comprenant le dispositif à vannes multiples (10), le dispositif à vannes multiples (10) ayant au moins une première et une seconde vanne (12, 22), dans lequel une unité de commande de vannes (34) est prévue pour activer les membranes flexibles (16, 26) des vannes (12, 22) du dispositif à vannes multiples (10) indépendamment les unes des autres, et comprenant une vanne à deux voies (44) pour alimenter la première vanne (12) en air et pour alimenter la seconde vanne (22) également en air, dans lequel la vanne à deux voies (44) est notamment une électrovanne.

8. Système de filtre à air (100) selon la revendication 7, dans lequel les membranes flexibles (16, 26) sont commandées pneumatiquement par l'unité de commande de vannes (34), notamment par la pression de l'air.

9. Système de filtre à air (100) selon la revendication 7 ou 8, comprenant le système de filtre à air selon la revendication 6, dans lequel l'unité de commande de vannes (34) est fixée à la région d'interface (52), notamment dans lequel l'unité de commande de vannes (34) est fixée à un composant de connexion (20) situé dans la région d'interface (52).

10. Procédé pour évacuer les particules de poussière (46) d'un système de filtre à air (100) selon les revendications 7 à 9, dans lequel l'agencement de vannes (80) est relié à une sortie (102) pour les particules de poussière (46) du système de filtre à air (100), le dispositif à vannes multiples (10) ayant au moins une première et une seconde vanne (12, 22), dans lequel une unité de commande de vannes (34) est prévue pour activer les membranes flexibles (16, 26) des vannes (12, 22) du dispositif à vannes multiples (10) indépendamment les unes des autres, et comprenant une vanne à deux voies (44) pour alimenter la première vanne (12) en air et pour alimenter la seconde vanne (22) également en air, dans lequel la vanne à deux voies (44) est notamment une électrovanne, le procédé consistant
- à faire fonctionner le système de filtre à air (100) lors d'une première phase de travail avec la première vanne (12) ouverte et la seconde vanne (22) fermée par la seconde membrane flexible activée (26) pour collecter les matières particulaires (46) dans un volume de collecte (30) pour les matières particulaires (46),
- à faire fonctionner le système de filtre à air (100) dans une seconde phase de travail avec la première vanne (12) fermée par la seconde membrane flexible activée (26) et la seconde vanne (22) ouverte pour évacuer la matière particulaire (46) à partir du volume de collecte (30) de la matière particulaire (46) le long d'un trajet de fluide (32) à travers un second connecteur (28).
